# EUROPÄISCHE PATENTSCHRIFT

(11) **EP 4 269 187 B1**
(45) Veröffentlichungstag und Bekanntmachung des Hinweises auf die Patenterteilung: **26.11.2025**
(21) Anmeldenummer: 23163793.5
(22) Anmeldetag: 23.03.2023
(51) Int. Cl.: B60R 25/40

(54) **NOTENTRIEGELUNG EINES KRAFTFAHRZEUGS**
EMERGENCY UNLOCKING OF A MOTOR VEHICLE
DÉVERROUILLAGE D'URGENCE D'UN VÉHICULE AUTOMOBILE

(30) Priorität: 29.04.2022 DE 102022204236
(43) Veröffentlichungstag der Anmeldung: 01.11.2023
(73) Patentinhaber: Volkswagen Aktiengesellschaft, 38440 Wolfsburg (DE)
(72) Erfinder: Ette, Bernd, 38442 Wolfsburg (DE)

(56) Entgegenhaltungen:
- DE-A1- 102015 213 984
- DE-A1- 102017 214 105
- DE-A1- 102017 214 109
- DE-A1- 102018 128 905

## Beschreibung

Die Erfindung betrifft eine Vorrichtung zum Notentriegeln eines Kraftfahrzeugs bei einer Fehlfunktion eines Steuergeräts und/oder einer Stromversorgung der Elektronik des Kraftfahrzeugs sowie ein entsprechendes Verfahren, Computer-Programm und System. Ferner betrifft die Erfindung ein Kraftfahrzeug.

Für den schlüssellosen Zugang zum Kraftfahrzeug werden die UWB-Technologie oder andere abstandsmessende Systeme, wie LF125 KHz, Bluetooth, Kamera zwischen einer elektronischen Einheit und dem Kraftfahrzeug benutzt. Die allgemeine Bezeichnung zur Steuerung von Klappen und Türen am Kraftfahrzeug ist Kessy - Keyless Entry und Exit. Durch einen schlüssellosen Zugang kann bei einer Fehlfunktion des Kessy kein automatisches Entriegeln mehr erfolgen. Bekannte Lösungen, dies zu umgehen, sind die Fremdeinspeisung von 12 V mit beispielsweise maximal 70 A, um die autorisierte Öffnung über die im Kraftfahrzeug eingebauten Computer zu ermöglichen. Weiterhin gibt es den mechanischen Schlüsselbart. Zudem sind Bluetooth basierte Lösungen in den Türen bekannt. Diese benötigen jedoch ein angelerntes Schlüsselgeheimnis, das zusätzliche Probleme des Diebstahlschutzes mit sich bringen kann.

Aus der Offenlegungsschrift CN 113888776 A ist eine Notentriegelungsvorrichtung für ein Fahrzeug bekannt, wobei die Entriegelungsvorrichtung Folgendes umfasst: eine Identitätsüberprüfungskomponente zum Überprüfen der Identität einer externen Steuervorrichtung; eine drahtlose Energieempfangskomponente zum Empfangen von Energie von der externen Steuervorrichtung, um einen Sicherheitsausführungsabschnitt zu versorgen; und den Sicherheitsausführungsabschnitt des Fahrzeugs in Reaktion auf die externe Steuervorrichtung zu entriegeln. Gleichzeitig wird auch ein Fahrzeug offenbart, das die vorgenannte Fahrzeug-Notentriegelungsvorrichtung umfasst. Nachteilig hierbei ist, dass eine drahtlose Energieübertragung notwendig ist und somit eine Vielzahl von möglichen Energiequellen nicht mit der offenbarten Lehre verwendbar ist. Zudem wird die externe Steuervorrichtung zum Entriegeln und zur Energieversorgung benötigt. Es wird also ein spezielles Gerät zum Entriegeln benötigt, das eventuell nicht mitgeführt wird.

Die Offenlegungsschrift WO 2021/047864A1 betrifft ein Verfahren zur externen elektrischen Energieversorgung entriegelungsrelevanter Vorrichtungen eines Fahrzeuges im Falle einer Fehlfunktion einer internen elektrischen Energieversorgung dieser Vorrichtungen durch eine im Fahrzeug angeordnete interne elektrische Energiespeicherquelle, um eine schlüssellose Authentifizierung eines berechtigten Nutzers des Fahrzeuges bereitzustellen. Die offenbarte Lehre beruht auf dem allgemeinen Gedanken, lediglich einen Teil der Steuereinrichtungen des Fahrzeuges, insbesondere lediglich entriegelungsrelevante Vorrichtungen des Fahrzeuges, über eine externe elektrische Energiespeicherquelle mit elektrischer Energie zu versorgen, um eine schlüssellose Authentifizierung des berechtigten Nutzers durchzuführen. Nachteilig hierbei ist, dass eine Notentriegelung nur bei einer Energieunterversorgung durchgeführt werden kann, bei einem Ausfall der Steuereinrichtungen des Fahrzeugs ist keine Notentriegelung möglich.

Die Offenlegungsschrift US 2022/0024415 A1 betrifft ein Verfahren, eine Vorrichtung und ein System zur Steuerung einer Fahrzeugtür, ein Fahrzeug, eine elektronische Vorrichtung und ein Speichermedium. Das Verfahren umfasst: Steuern eines Bilderfassungsmoduls, das an einem Fahrzeug angeordnet ist, um einen Videostream zu erfassen; Durchführen einer Gesichtserkennung auf der Grundlage von mindestens einem Bild in dem Videostrom, um ein Gesichtserkennungsergebnis zu erhalten; Bestimmen von Steuerinformationen, die mindestens einer Fahrzeugtür des Fahrzeugs entsprechen, auf der Grundlage des Gesichtserkennungsergebnisses; wenn die Steuerinformationen das Steuern einer beliebigen Fahrzeugtür des Fahrzeugs zum Öffnen umfassen, Erhalten von Zustandsinformationen der Fahrzeugtür; wenn die Zustandsinformationen der Fahrzeugtür nicht entriegelt sind, Steuern der Fahrzeugtür zum Entriegeln und Öffnen; und/oder wenn die Zustandsinformationen der Fahrzeugtür entriegelt und ungeöffnet sind, Steuern des Fahrzeugtür-zu-Öffnen-Moduls. Nachteilig hierbei ist, dass sich die offenbarte Lehre nicht zum Durchführen einer Notentriegelung eignet.

Die Offenlegungsschrift DE 10 2017 214 105 A1 zeigt eine Zugangsanordnung für ein Fahrzeug nach dem Oberbegriff des Anspruchs 1, um eine Notentriegelung des Fahrzeugs bei Ausfall des Fahrzeugbordnetzes durchführen zu können.

Der Erfindung liegt nun die Aufgabe zugrunde, eine verbesserte und kosteneffiziente Möglichkeit anzugeben, ein Fahrzeug bei einer Fehlfunktion eines Steuergeräts und/oder einer Stromversorgung der Elektronik des Kraftfahrzeugs zu entriegeln. Insbesondere soll dabei eine sichere Bestimmung erfolgen können, ob der Notentriegelnde eine Berechtigung zum Notentriegeln hat.

Gelöst wird diese Aufgabe durch eine Vorrichtung zum Notentriegeln eines Kraftfahrzeugs bei einer Fehlfunktion eines Steuergeräts und/oder einer Stromversorgung der Elektronik des Kraftfahrzeugs, die Vorrichtung aufweisend:
eine zum Empfangen von Autorisierungs-Daten einer Empfangseinheit, die mit einer Autorisierungs-Vorrichtung zum Autorisieren eines berechtigten Nutzers kommunizierend verbindbar ist, und zum Einrichten einer Energieeinspeisung eingerichtete Eingangsschnittstelle;
eine zum Analysieren der Autorisierungs-Daten und Bestimmen eines Steuerbefehls basierend auf den Autorisierungs-Daten ausgebildete Analyseeinheit und
eine zum Übermitteln des bestimmten Steuerbefehls und zum Einrichten einer Energieeinspeisung zu einem Entriegelungsaktor und der Empfangseinheit ausgebildete Ausgangsschnittstelle; wobei
der Steuerbefehl ein Entriegeln des Kraftfahrzeugs mittels einer über die Energieeinspeisung eingespeisten Energie bewirkt, wenn der Nutzer berechtigt ist.

Ferner wird die obige Aufgabe gelöst durch ein System zum Notentriegeln eines Kraftfahrzeugs bei einer Fehlfunktion eines Steuergeräts und/oder einer Stromversorgung der Elektronik des Kraftfahrzeugs, das System aufweisend:
eine Vorrichtung wie oben aufgeführt;
einen Energiedonator zum Einspeisen von Energie;
eine Autorisierungs-Vorrichtung, zum Autorisieren eines berechtigten Nutzers; und
eine Empfangseinheit, die mit der Autorisierungs-Vorrichtung kommunizierend verbindbar ist;
sowie ein Kraftfahrzeug mit einem solchen System.

Schließlich wird die obige Aufgabe gelöst durch ein Verfahren zum Notentriegeln eines Kraftfahrzeugs bei einer Fehlfunktion eines Steuergeräts und/oder einer Stromversorgung der Elektronik des Kraftfahrzeugs, das Verfahren aufweisend die folgenden Schritte.
Empfangen von Autorisierungs-Daten einer Empfangseinheit, die mit einer Autorisierungs-Vorrichtung zum Autorisieren eines berechtigten Nutzers kommunizierend verbindbar ist, und Einrichten einer Energieeinspeisung;
Analysieren der Autorisierungs-Daten und Bestimmen eines Steuerbefehls, basierend auf den Autorisierungs-Daten, und
Übermitteln des bestimmten Steuerbefehls und zum Einrichten einer Energieeinspeisung zu einem Entriegelungsaktor und der Empfangseinheit; wobei
der Steuerbefehl ein Entriegeln des Kraftfahrzeugs mittels einer über die Energieeinspeisung eingespeisten Energie bewirkt, wenn der Nutzer berechtigt ist;
sowie ein entsprechendes Computer-Programm.

Durch eine Eingangsschnittstelle kann eine kosteneffiziente Vorrichtung geschaffen werden, die vorzugsweise mit vorhandenen, im Kraftfahrzeug verbauten Systemen, Modulen und Einheiten verwendet werden kann. Durch das Verwenden einer Eingangsschnittstelle zum Empfangen von Daten kann eine technisch einfache und kostengünstige Vorrichtung geschaffen werden, die insbesondere nicht selbst zum Erfassen der Informationen ausgebildet sein muss. Eine Eingangsschnittstelle kann dabei kabelgebunden und/oder drahtlos ausgebildet sein und vorzugsweise ein oder mehrere Kommunikationsprotokolle unterstützen. Durch eine Analyseeinheit kann ein vorteilhafter Steuerbefehl erzeugt werden und ein Entriegeln des Kraftfahrzeugs mittels einer über die Energieeinspeisung eingespeisten Energie bewirkt werden, wenn der Nutzer berechtigt ist. Durch die vorzugsweise getrennt von einem Fahrzeugsteuersystem ausgebildeten aber teilweise mit im Kraftfahrzeug verbauten Systeme, Module und/oder Einheiten verbundene Vorrichtung kann auch bei einem Ausfall einer Energieversorgung oder einem teilweisen Ausfall der Systeme zuverlässig und sicher eine Entriegelung des Kraftfahrzeugs erfolgen. Insbesondere kann ein Energieverbrauch bei einer Notentriegelung gering ausfallen, da nur die zum Entriegeln notwendigen Einheiten mit Energie versorgt werden müssen. Eine Verbindung zum Hauptrechner ist nicht notwendig, daraus resultiert auch die geringe Stromeinspeisung, so dass normale Ladegeräte für Smartphones, USB-Powerbanks oder Smartphones selbst in der Lage, sind die Notentriegelung durchzuführen. Eine Ausgangsschnittstelle ermöglicht eine kosteneffiziente Vorrichtung, die vorzugsweise mit vorhandenen Aktoren verwendet werden kann.

Ferner ist vorgesehen, dass die Eingangsschnittstelle dazu ausgebildet ist, Freigabedaten zu empfangen, und die Analyseeinheit dazu ausgebildet ist, einen Steuerbefehl zu generieren, der ein Freischalten der Eingangsschnittstelle zum Empfangen von Autorisierungs-Daten und zum Einrichten einer Energieeinspeisung nach Erhalt der Freigabedaten bewirkt. Vorzugsweise kann die Vorrichtung nach Art eines whatchdogs fungieren. Hierdurch kann die Vorrichtung wirksam vor Missbrauch geschützt werden. Insbesondere kann die Autorisierung der Stromeinspeisung durch einen NFC-Tag (near field communication) erfolgen und nur dann aktiv sein, wenn es zu Fehlern im Kraftfahrzeug kommt. Sogenannte Whatchdogfunktionen können die Schnittstelle freischalten.

In weiterer bevorzugter Ausgestaltung der Erfindung ist vorgesehen, dass die Eingangsschnittstelle dazu ausgebildet ist, Autorisierungs-Daten einer Empfangseinheit in Form eines Kessy-Moduls, mit einer UWB-Kommunikationseinheit, einer Bluetooth-Kommunikationseinheit und/oder einer NFC-Kommunikationseinheit, zu empfangen. Hierdurch kann eine kostengünstige Vorrichtung geschaffen werden. Insbesondere kann auf Routinen und Hardware des Kessy-Moduls zurückgegriffen werden, so dass kein Anlernen nötig ist. Es versteht sich, dass auch die Analyseeinheit selbst dazu ausgebildet sein kann, entsprechende Routinen auszuführen, um eine Berechtigung eines Nutzers zu ermitteln.

In weiterer bevorzugter Ausgestaltung der Erfindung ist vorgesehen, dass die Eingangsschnittstelle und die Ausgangsschnittstelle dazu ausgebildet sind, eine Energieeinspeisung mittels eines Energiedonators in Form eines Smartphones, einer USB-Powerbank und/oder eines Ladegeräts für ein Smartphone einzurichten. Hierdurch kann eine Möglichkeit zur Notentriegelung geschaffen werden, die ein Notentriegeln mit vorhandenen Mitteln ermöglicht. Insbesondere kann ein Notentriegeln auch erfolgen, wenn das Kraftfahrzeug entfernt von einem Wohnort des Nutzers liegenbleibt. Smartphones, USB-Powerbanks und/oder Ladegeräte sind in großer Stückzahl verfügbar und zumindest teilweise genormt, so dass eine hohe Wahrscheinlichkeit besteht, auch unterwegs ein derartiges Gerät zur Verfügung zu haben.

In weiterer bevorzugter Ausgestaltung der Erfindung ist vorgesehen, dass die Eingangsschnittstelle einen Anschluss zur Energieeinspeisung aufweist, der von einem Fahrzeugäußeren aus zugänglich ist, und die Analyseeinheit, die Ausgangsschnittstelle und die Empfangseinheit von einem Fahrzeugäußeren aus unzugänglich sind. Hierdurch kann die Vorrichtung zuverlässig vor Manipulation geschützt werden.

In weiterer bevorzugter Ausgestaltung der Erfindung ist vorgesehen, dass die Analyseeinheit einen Microkontroller umfasst. Durch einen Microkontroller kann eine energieeffiziente und bauraumsparende Vorrichtung geschaffen werden, die in verschiedenen Kraftfahrzeugtypen Anwendung finden kann.

In weiterer bevorzugter Ausgestaltung der Erfindung ist vorgesehen, dass der Entriegelungsaktor einen Motor einer Zentralverriegelung des Kraftfahrzeugs umfasst. Hierdurch kann eine einfache und bewährte Technik Anwendung finden, die sich sowohl zum regulären Entriegeln als auch zum Notentriegeln eignet.

In weiterer bevorzugter Ausgestaltung der Erfindung ist vorgesehen, dass die Eingangsschnittstelle einen Anschluss zur Energieeinspeisung aufweist, der an einem Fahrzeugäußeren angeordnet ist, und die Analyseeinheit, die Ausgangsschnittstelle und die Empfangseinheit in einem Fahrzeuginneren angeordnet sind. Hierdurch kann technisch einfach sichergestellt sein, dass die Analyseeinheit, die Ausgangsschnittstelle und die Empfangseinheit vor Manipulation, insbesondere mechanischer Manipulation, geschützt sind.

Ferner ist erfindungsgemäß der Schritt vorgesehen: Empfangen von Freigabedaten und Generieren eines Steuerbefehls, der ein Freischalten der Eingangsschnittstelle zum Empfangen von Autorisierungs-Daten und zum Einrichten einer Energieeinspeisung nach Erhalt der Freigabedaten bewirkt. Vorzugsweise kann das Verfahren nach Art eines whatchdogs fungieren. Hierdurch kann eine vorgeschaltete Schutzroutine geschaffen werden, die einem Missbrauch der Schnittstelle vorbeugen kann.

In weiterer bevorzugter Ausgestaltung der Erfindung ist vorgesehen, dass der Schritt Einrichten einer Energieeinspeisung eine Energieeinspeisung mittels eines Smartphones, einer USB-Powerbank und/oder eines Ladegeräts für ein Smartphone umfasst. Hierdurch kann ein Verfahren zum Notentriegeln geschaffen werden, das mit alltäglichen Geräten funktioniert und keine Spezialwerkzeuge oder dergleichen benötigt.

In weiterer bevorzugter Ausgestaltung der Erfindung ist vorgesehen, dass der Schritt Empfangen von Autorisierungs-Daten ein Empfangen von Autorisierungs-Daten einer Empfangseinheit in Form eines Kessy-Moduls, mit einer UWB-Kommunikationseinheit, einer Bluetooth-Kommunikationseinheit und/oder einer NFC-Kommunikationseinheit, umfasst. Hierdurch kann das Verfahren auf bereits bestehende Standards zurückgreifen. Es kann eine schnelle, zuverlässige und technisch einfache Integration des Verfahrens erfolgen.

Weitere bevorzugte Ausgestaltungen der Erfindung ergeben sich aus den übrigen, in den Unteransprüchen genannten Merkmalen.

Die verschiedenen in dieser Anmeldung genannten Ausführungsformen der Erfindung sind, sofern im Einzelfall nicht anders ausgeführt, mit Vorteil miteinander kombinierbar.

Ultra-Breitband-Technologie (UWB; englisch: Ultra-wideband) beschreibt einen Ansatz für Nahbereichsfunkkommunikation für den kommerziellen Massenmarkt. Wichtigstes Merkmal ist die Nutzung extrem großer Frequenzbereiche mit einer Bandbreite von mindestens 500 MHz oder von mindestens 20 % des arithmetischen Mittelwertes von unterer und oberer Grenzfrequenz des genutzten Frequenzbandes.

Ein schlüsselloses Kraftfahrzeugzugangssystem, Keyless Entry oder Keyless Go, beschreibt ein System, um ein Kraftfahrzeug ohne aktive Benutzung eines Autoschlüssels zu entriegeln und durch das bloße Betätigen des Startknopfes zu starten. Ermöglicht wird das durch einen entsprechenden Schlüssel mit Chip, den der Fahrzeuglenker mit sich führt. Vorzugsweise agiert ein Keyless Entry System im Automatikmodus, so dass sobald sich der Fahrer mit einer Chipkarte oder einem Schlüssel mit Chip dem Kraftfahrzeug nähert, die Chipkarte oder der Schlüssel mit Chip erkannt wird und bei oder vor Berührung eines Türgriffs das Kraftfahrzeug automatisch entriegelt wird. Beim Entfernen vom Kraftfahrzeug wird es automatisch wieder verriegelt.

Ein Watchdog - englisch für Wachhund; auch als watchdog timer bekannt - bezeichnet vorzugsweise eine Funktion zur Ausfallerkennung eines Systems, vorwiegend in Steuerungsanwendungen. Wird dabei eine mögliche Fehlfunktion erkannt, so wird ein Umschalten auf ein redundantes System zur Notentriegelung eingeleitet.

Die Erfindung wird nachfolgend in Ausführungsbeispielen anhand der zugehörigen Zeichnungen erläutert. Es zeigen:
- Figur 1: eine schematische Darstellung einer Vorrichtung zum Notentriegeln eines Kraftfahrzeugs bei einer Fehlfunktion eines Steuergeräts und/oder einer Stromversorgung der Elektronik des Kraftfahrzeugs;
- Figur 2: eine schematische Darstellung einer Variante eines erfindungsgemäßen Systems;
- Figur 3: eine schematische Darstellung einer weiteren Variante eines erfindungsgemäßen Systems in einem Kraftfahrzeug;
- Figur 4: eine schematische, detaillierte Darstellung einer Variante eines erfindungsgemäßen Systems und
- Figur 5: eine schematische Darstellung der Schritte eines erfindungsgemäßen Verfahrens.

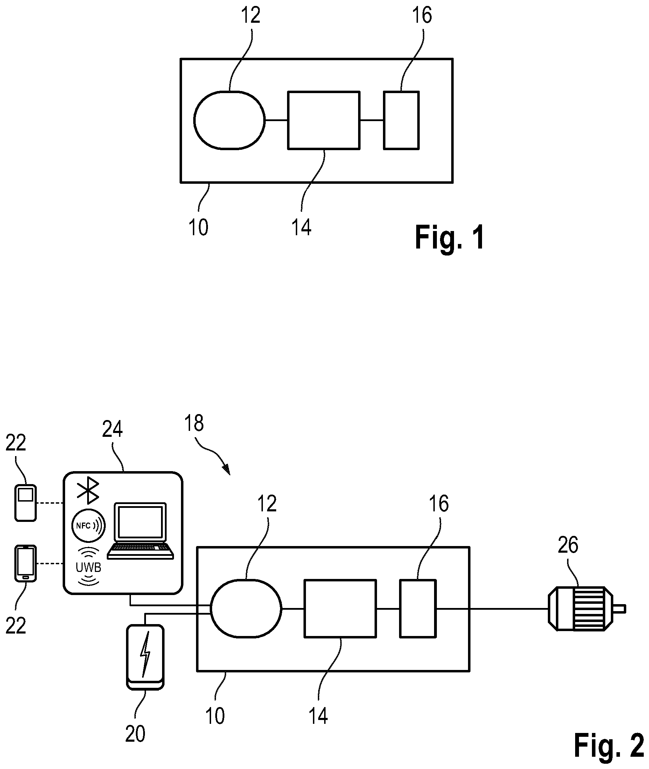

Figur 1 zeigt eine schematische Darstellung einer Vorrichtung 10 zum Notentriegeln eines Kraftfahrzeugs bei einer Fehlfunktion eines Steuergeräts und/oder einer Stromversorgung der Elektronik des Kraftfahrzeugs. Die Vorrichtung 10 umfasst eine Eingangsschnittstelle 12, eine Analyseeinheit 14 und eine Ausgangsschnittstelle 16.

Die Eingangsschnittstelle 12 ist dazu ausgebildet, Daten umfassend Autorisierungs-Daten einer Empfangseinheit, die mit einer Autorisierungs-Vorrichtung zum Autorisieren eines berechtigten Nutzers kommunizierend verbindbar ist, zu empfangen. Die Daten können beispielsweise Daten einer UWB-Kommunikationseinheit, einer Bluetooth- Kommunikationseinheit und/oder einer NFC-Kommunikationseinheit oder dergleichen umfassen. Insbesondere können die Daten von einem Kessy-Modul stammen und vorprozessiert sein. Die Eingangsschnittstelle 12 ist ferner zum Einrichten einer Energieeinspeisung ausgebildet. Zum Empfangen ist die Eingangsschnittstelle 12 vorzugsweise an ein fahrzeuginternes Übertragungsnetz angeschlossen. Ferner kann die Eingangsschnittstelle 12 auch zur drahtlosen Kommunikation ausgebildet sein oder mit einem proprietären, beispielsweise kabelgebundenen, Übertragungsnetz verbunden sein.

Die Analyseeinheit 14 ist dazu ausgebildet, die Autorisierungs-Daten zu empfangen und einen Steuerbefehl, basierend auf den Autorisierungs-Daten, zu bestimmen. Der Steuerbefehl bewirkt ein Entriegeln des Kraftfahrzeugs mittels einer über die Energieeinspeisung eingespeisten Energie, wenn der Nutzer berechtigt ist. Eine Berechtigung des Nutzers kann von der Analyseeinheit 14 ermittelt werden. Alternativ kann eine Berechtigung des Nutzers bereits von einer anderen Einheit bestimmt worden und in den Autorisierungs-Daten hinterlegt sein.

Bevorzugt ist die Analyseeinheit 14 als Microkontroller ausgebildet.

Die Ausgangsschnittstelle 16 ist dazu ausgebildet, den Steuerbefehl zu übermitteln und eine Energieeinspeisung zu einem Entriegelungsaktor und der Empfangseinheit einzurichten. Die Ausgangsschnittstelle 16 kann analog zur Eingangsschnittstelle 12 zur Kommunikation ausgebildet sein. Es versteht sich, dass die Eingangsschnittstelle 12 und die Ausgangsschnittstelle 16 auch kombiniert als Kommunikationsschnittstelle zum Senden und Empfangen ausgebildet sein können.

Figur 2 zeigt eine schematische Darstellung eines erfindungsgemäßen Systems 18 mit einer Vorrichtung 10, einem Energiedonator 20, einer Autorisierungs-Vorrichtung 22, einer Empfangseinheit 24 und einem Entriegelungsaktor 26.

Die Vorrichtung 10 empfängt, wie oben beschrieben, Autorisierungs-Daten.

Auf Basis der Autorisierungs-Daten ermittelt die Vorrichtung 10, ob ein Nutzer berechtigt ist, eine Notentriegelung durchzuführen, und erstellt einen Steuerbefehl, der bewirkt, dass Energie des Energiedonators 20 zum Entriegelungsaktor 26 gelangt, um diesen zum Entriegeln des Kraftfahrzeugs zu betreiben.

In dem gezeigten Beispiel umfasst der Energiedonator 20 eine USB-Powerbank. Die Autorisierungs-Vorrichtung 22 umfasst einen Fahrzeugschlüssel oder ein Smartphone. Die Empfangseinheit 24 umfasst ein Kessy-Modul mit einer UWB-Kommunikationseinheit, einer Bluetooth-Kommunikationseinheit und/oder einer NFC-Kommunikationseinheit. Der Entriegelungsaktor 26 ist in dem gezeigten Beispiel als Zentralverriegelungsmotor ausgebildet. Es versteht sich, dass weitere Autorisierungs-Vorrichtungen 22, wie beispielsweise ein NFC-Sender, eine Smartwatch etc., denkbar sind.

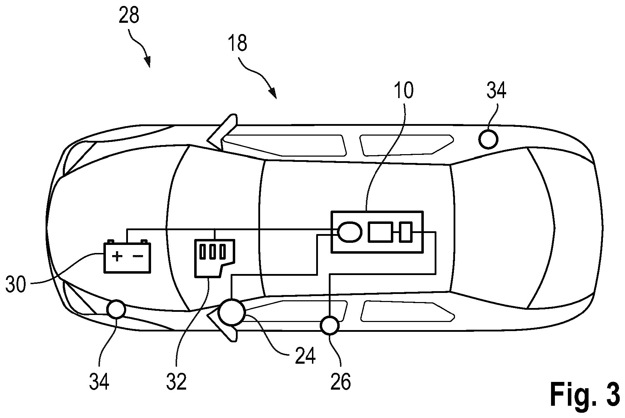

Figur 3 zeigt eine schematische Darstellung einer Variante des Systems 18 in einem Kraftfahrzeug 28. Das System 18 umfasst in dem gezeigten Beispiel eine Vorrichtung 10, eine Empfangseinheit 24 und einen Entriegelungsaktor 26. Aus Gründen der Übersicht sind der Energiedonator 20 und die Autorisierungs-Vorrichtung 22 nicht explizit dargestellt.

Das Kraftfahrzeug 28 umfasst zudem eine Batterie 30, ein Steuergerät 32 und eine Ladeklappe 34. Es versteht sich, dass im Falle eines Kraftfahrzeugs 28 mit Verbrennungsmotor anstatt der Ladeklappe 34 eine Tanklappe Anwendung findet.

In Figur 3 ist eine Situation dargestellt, bei der eine Fehlfunktion der Batterie 30 und/oder eines Steuergeräts 32 des Kraftfahrzeugs 28 vorliegt. Folglich kann das Kraftfahrzeug 28 vorzugsweise nur durch ein Notentriegeln geöffnet werden.

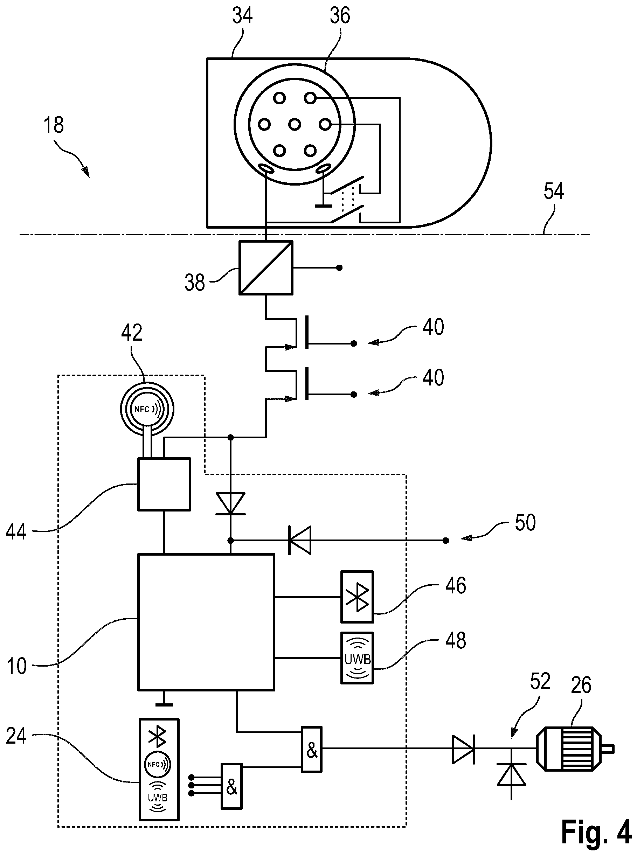

In Figur 4 ist eine Variante eines erfindungsgemäßen Systems 18 detaillierter dargestellt. Die Ladeklappe 34 weist einen Anschluss 36 auf, über den der nicht gezeigte Energiedonator 20 angeschlossen werden kann, um eine Energieeinspeisung zu ermöglichen.

Dem Anschluss 36 ist ein Wächter 38 nachgeschaltet sowie zwei Abfrageglieder 40. Der Wächter 38 gibt eine Energieeinspeisung frei, wenn die Ladeklappe 34 entriegelt ist. Hierdurch kann einem Missbrauch vorgebeugt werden.

Die Logikabfragen der Abfrageglieder 40 erfassen einen Fehler eines Fahrzeugsteuergeräts und/oder einer Batteriespannung der Batterie 30, so dass eine Energieeinspeisung beispielsweise erst erfolgt, wenn die Batteriespannung unter einen vordefinierten Wert fällt und/oder ein Fehler eines Fahrzeugsteuergeräts vorliegt.

Ist eine Energieeinspeisung freigegeben, kann ein NFC-Leser 42 einer NFC-Kommunikationseinheit 44 mit Energie versorgt werden und so eine Autorisierung eines berechtigten Nutzers mittels NFC-Technologie ermöglichen.

Nach erfolgter Autorisierung kann die Vorrichtung 10 dann den als Zentralverriegelungsmotor ausgebildeten Entriegelungsaktor 26 mittels der eingespeisten Energie betätigen und eine Notentriegelung bewirken. Es kann folglich eine Energieeinspeisung zum Entriegelungsaktor 26 eingerichtet werden und der Entriegelungsaktor 26 mittels eines Steuerbefehls zum Entriegeln angesteuert werden. Im einfachsten Fall umfasst der Steuerbefehl ein Anlegen einer Spannung an den Entriegelungsaktor 26.

Vorzugsweise ist die Autorisierung der Stromeinspeisung durch einen NFC-Tag nur aktiv, wenn es zu Fehlern im Kraftfahrzeug 28 kommt und Watchdogfunktionen die Schnittstelle freischalten. Ein paralleler Betrieb des NFC-Lesers 42 bei einer Bordspannung, beispielsweise 12 V, ist immer möglich. Im Notentriegelungsmodus ist die NFC-Schnittstelle vorzugsweise als aktiver NFC-Master eingestellt.

Die Vorrichtung 10 kann zudem mit einer Bluetooth-Kommunikationseinheit 46 einer Empfangseinheit 24 in Form eines Kessy-Moduls und/oder einer UWB-Kommunikationseinheit 48 kommunizieren, um eine 2-Faktor-Autorisierung zu ermöglichen. Es versteht sich, dass die Bluetooth-Kommunikationseinheit 46 und/oder die UWB-Kommunikationseinheit 48 auch vom Kessy-Modul und der Vorrichtung 10 gemeinsam genutzt werden können. Die gewählte Darstellung in der Figur 4 dient der besseren Übersicht und dem besseren Verständnis.

Die Vorrichtung 10 kann insbesondere einen Mikrocontroller umfassen und steuert die Bluetooth-Kommunikationseinheit 46, UWB-Kommunikationseinheit 48 und/oder den NFC-Leser 42 beziehungsweise die NFC-Funkschnittstelle. Diese wird auch im normalen Betrieb des Kraftfahrzeugs 28 benutzt, so dass keine zusätzlichen Kosten anfallen.

Zu einer Erhöhung der Sicherheit kann zudem mittels der Bluetooth-Kommunikationseinheit 46, der UWB-Kommunikationseinheit 48 und/oder dem NFC-Leser 42 ein Abstand zur Autorisierungs-Vorrichtung 22 ermittelt werden. Für Kraftfahrzeuge 28 mit geringeren Diebstahlanforderungen kann auf eine Bluetooth-Kommunikationseinheit 46 und/oder eine UWB-Kommunikationseinheit 48 verzichtet werden.

Um eine Überprüfung der Vorrichtung 10 zu ermöglichen, ist eine Bordspannungseinspeisung 50 vorgesehen. Ferner ist eine Diagnoseschnittstelle 52 zur Überprüfung der Funktionalität des Entriegelungsaktors 26 vorgesehen. Der Zentralverriegelungsmotor wird bei der Notentriegelung direkt angesteuert. Die Diagnose des Gesamtsystems ist während des normalen Betriebs des Kraftfahrzeugs 28 möglich, da der Zentralverriegelungsmotor mit geringeren Zeiten angesteuert werden kann, ohne dass der Rotor des Zentralverriegelungsmotors sich bewegt. Hiermit ist die Funktion Notentriegelung immer sichergestellt.

Zur Verdeutlichung der Anordnung der einzelnen Bauteile im Kraftfahrzeugs 28 ist eine Außenhaut 54 des Kraftfahrzeugs 28 gestrichelt dargestellt. Die Ladeklappe 34 und der Anschluss 36 sind von außerhalb des Kraftfahrzeugs 28 zugänglich, die restlichen Komponenten sind vorzugsweise von außerhalb des Kraftfahrzeugs 28 unzugänglich.

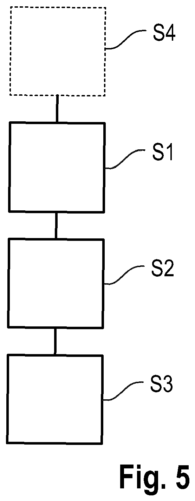

In Figur 5 sind schematisch die Schritte eines erfindungsgemäßen Verfahrens dargestellt.

In einem ersten Schritt S1 erfolgt ein Empfangen von Autorisierungs-Daten einer Empfangseinheit 24, die mit einer Autorisierungs-Vorrichtung 22 zum Autorisieren eines berechtigten Nutzers kommunizierend verbindbar ist, und ein Einrichten einer Energieeinspeisung.

In einem zweiten Schritt S2 werden die Autorisierungs-Daten analysiert und ein Steuerbefehl basierend auf den Autorisierungs-Daten bestimmt.

In einem dritten Schritt S3 erfolgt ein Übermitteln des bestimmten Steuerbefehls und zum Einrichten einer Energieeinspeisung zu einem Entriegelungsaktor 26 und der Empfangseinheit 24.

Der Steuerbefehl bewirkt ein Entriegeln des Kraftfahrzeugs 28 mittels einer über die Energieeinspeisung eingespeisten Energie, wenn der Nutzer berechtigt ist.

In einem vierten Schritt S4 erfolgt ein Empfangen von Freigabedaten und Generieren eines Steuerbefehls, der ein Freischalten der Eingangsschnittstelle 12 zum Empfangen von Autorisierungs-Daten und zum Einrichten einer Energieeinspeisung nach Erhalt der Freigabedaten bewirkt. Dieser Schritt S4 ist gestrichelt dargestellt.

Besonders bevorzugt kann das Verfahren nach Art eines whatchdogs fungieren.

Der Schritt Einrichten einer Energieeinspeisung umfasst eine Energieeinspeisung mittels eines Smartphones, einer USB-Powerbank und/oder eines Ladegeräts für ein Smartphone.

Der Schritt Empfangen von Autorisierungs-Daten umfasst ein Empfangen von Autorisierungs-Daten einer Empfangseinheit 24 in Form eines Kessy-Moduls, mit einer UWB-Kommunikationseinheit 48, einer Bluetooth-Kommunikationseinheit 46 und/oder einer NFC-Kommunikationseinheit 44.

Die Erfindung wurde ausführlich beschrieben. Ein Fachmann erkennt, dass die Erfindung für jede Art von Kraftfahrzeuge, insbesondere auch Wasserfahrzeuge, Flugzeuge, Schienenfahrzeuge, Anwendung finden kann. Ein Personenkraftwagen wurde nur beispielshaft als Kraftfahrzeug gewählt, um die Erfindung zu verdeutlichen. Insbesondere kann die offenbarte Lehre in wenigstens einer der folgenden Ausführungsformen verwirklicht sein oder einen der folgenden Vorteile ermöglichen.

Es kann eine gesicherte und autorisierte Einspeisung der Spannungsversorgung für das Fahrzeugzugangssystem erfolgen.

Einem Missbrauch der Schnittstelle zur Energieeinspeisung kann entgegengewirkt werden, diese wird nur im Fehlerfall freigeben.

Es kann ein skalierbares Zugangssystem zur Noteinspeisung und Öffnung/Schließung für hochpreisige und niederpreisige Fahrzeuge geschaffen werden, vorzugsweise ohne neue Varianten zu erzeugen.

Es kann ein Minimal-Ansatz der zusätzlichen Hardwarekomponenten im Kraftfahrzeug ermöglicht werden.

Es kann eine durch einen elektronischen/digitalen Schlüssel, Key-gesicherte Notöffnung über Smartphones sowie herkömmliche Funkfernbedienungen erfolgen.

Es kann ein Einsatz des Systems erfolgen, der skalierbar im entsprechenden Wert der Fahrzeuge ist, insbesondere mit Smartphones, NFC-Tag oder Funkfernbedienung.

Es kann eine einfache Adaptierbarkeit der externen Spannungsversorgung im Sichtbereich des Nutzers durch den Nutzer erfolgen.

Eine Integration der Schaltungsteile in herkömmliche Steuergeräte, wie Türsteuergeräte oder E-Schlösser, ist möglich.

Der Verbau der benötigten Komponenten erfolgt bevorzugt im Inneren des Fahrzeugs und damit sicher vor Manipulationen.

Ein Einsatz einer 2-Faktor-Autorisierung ist möglich, insbesondere um sehr hochpreisige Fahrzeuge zusätzlich zu schützen.

Das NFC-Modul kann für den Zugang als Notentriegelungsmodul genutzt werden.

Vorzugsweise wird kein Einsatz von zusätzlichen Akkus im Kraftfahrzeug benötigt.

Es ist ein Verfahren zur Notöffnung von Fahrzeugen bei einer leeren 12V-Batterie vorgesehen. Die 12V-Batterie im Fahrzeug versorgt den Autorisierungscomputer und die Ansteuerung der Schlösser eines Fahrzeugs. Derzeitig wird zur autorisierten Notöffnung ein am Funkschlüssel platzierter Schlüsselbart und ein mechanisches Schloss am Fahrzeug verwendet. Diese beiden Elemente können mit dieser Erfindung eingespart werden. Zusätzlich verzichtet die Erfindung auf ein zusätzliches Hochstromeinspeisegerät zur Notversorgung des Autorisierungscomputers und des Steuergeräts für die Schlossansteuerung. Es ist vorgesehen, dass durch eine externe Stromquelle, wie ein Handy-Ladegerät oder eine Powerbank, ein Notöffnungs- und Autorisierungssystem aktiviert werden kann, um das Fahrzeug zu öffnen.

Vorteile der offenbarten Lehre sind insbesondere:
Minimaler Hardwareaufwand, Logikgatter und Dioden und Transistoren, keine Mikroprozessortechnik ist notwendig. Hiermit sind die Kosten geringer als bei einem mechanischen Notschließzylinder.
Mehrfache Autorisierung und Skalierbarkeit der Lösung für die notwendigen Kundenanforderungen.
Bedienstelle an der Fahrertür oder als Backup auch an der Fronttür links oder rechts ohne Bauelemente ist möglich.
Leichte Adaptierbarkeit der externen Stromversorgung. Einfache handelsübliche Steckernetzteile oder auch Powerbanks können benutzt werden.

### Bezugszeichenliste

- 10: Vorrichtung
- 12: Eingangsschnittstelle
- 14: Analyseeinheit
- 16: Ausgangsschnittstelle
- 18: System
- 20: Energiedonator
- 22: Autorisierungs-Vorrichtung
- 24: Empfangseinheit
- 26: Entriegelungsaktor
- 28: Kraftfahrzeug
- 30: Batterie
- 32: Steuergerät
- 34: Ladeklappe
- 36: Anschluss
- 38: Wächter
- 40: Abfrageglieder
- 42: NFC-Leser
- 44: NFC-Kommunikationseinheit
- 46: Bluetooth-Kommunikationseinheit
- 48: UWB-Kommunikationseinheit
- 50: Bordspannungseinspeisung
- 52: Diagnoseschnittstelle
- 54: Außenhaut
- S1-S4: Verfahrensschritte

## Patentansprüche

1. Vorrichtung (10) zum Notentriegeln eines Kraftfahrzeugs (28) bei einer Fehlfunktion eines Steuergeräts (32) und/oder einer Stromversorgung der Elektronik des Kraftfahrzeugs (28), die Vorrichtung (10) aufweisend:
eine zum Empfangen von Autorisierungs-Daten einer Empfangseinheit (24), die mit einer Autorisierungs-Vorrichtung (22) zum Autorisieren eines berechtigten Nutzers kommunizierend verbindbar ist, und zum Einrichten einer Energieeinspeisung eingerichtete Eingangsschnittstelle (12);
eine zum Analysieren der Autorisierungs-Daten und Bestimmen eines Steuerbefehls, basierend auf den Autorisierungs-Daten, ausgebildete Analyseeinheit (14), und
eine zum Übermitteln des bestimmten Steuerbefehls und zum Einrichten einer Energieeinspeisung zu einem Entriegelungsaktor (26) und der Empfangseinheit (24) ausgebildete Ausgangsschnittstelle (16); wobei
der Steuerbefehl ein Entriegeln des Kraftfahrzeugs (28) mittels einer über die Energieeinspeisung eingespeisten Energie bewirkt, wenn der Nutzer berechtigt ist,
**dadurch gekennzeichnet, dass**
die Eingangsschnittstelle (12) dazu ausgebildet ist, Freigabedaten zu empfangen, und die Analyseeinheit (14) dazu ausgebildet ist, einen Steuerbefehl zu generieren, der ein Freischalten der Eingangsschnittstelle (12) zum Empfangen von Autorisierungs-Daten und zum Einrichten einer Energieeinspeisung nach Erhalt der Freigabedaten bewirkt.

2. Vorrichtung (10) nach Anspruch 1, wobei die Vorrichtung (10) nach Art eines whatchdogs fungiert.

3. Vorrichtung (10) nach einem der vorstehenden Ansprüche, wobei die Eingangsschnittstelle (12) dazu ausgebildet ist, Autorisierungs-Daten einer Empfangseinheit (24) in Form eines Kessy-Moduls, mit einer UWB-Kommunikationseinheit (48), einer Bluetooth-Kommunikationseinheit (46) und/oder einer NFC-Kommunikationseinheit (44), zu empfangen.

4. Vorrichtung (10) nach einem der vorstehenden Ansprüche, wobei die Eingangsschnittstelle (12) und die Ausgangsschnittstelle (16) dazu ausgebildet sind, eine Energieeinspeisung mittels eines Energiedonators (20) in Form eines Smartphones, einer USB-Powerbank und/oder eines Ladegeräts für ein Smartphone einzurichten.

5. Vorrichtung (10) nach einem der vorstehenden Ansprüche, wobei
die Eingangsschnittstelle (12) einen Anschluss (36) zur Energieeinspeisung aufweist, der von einem Fahrzeugäußeren aus zugänglich ist; und
die Analyseeinheit (14), die Ausgangsschnittstelle (16) und die Empfangseinheit (24) von einem Fahrzeugäußeren aus unzugänglich sind.

6. Vorrichtung (10) nach einem der vorstehenden Ansprüche, wobei die Analyseeinheit (14) einen Microkontroller umfasst.

7. Vorrichtung (10) nach einem der vorstehenden Ansprüche, wobei der Entriegelungsaktor (26) einen Motor einer Zentralverriegelung des Kraftfahrzeugs (28) umfasst.

8. System (18) zum Notentriegeln eines Kraftfahrzeugs (28) bei einer Fehlfunktion eines Steuergeräts (32) und/oder einer Stromversorgung der Elektronik des Kraftfahrzeugs (28), das System (18) aufweisend:
eine Vorrichtung (10) nach einem der vorstehenden Ansprüche;
einen Energiedonator (20) zum Einspeisen von Energie;
eine Autorisierungs-Vorrichtung (22) zum Autorisieren eines berechtigten Nutzers; und
eine Empfangseinheit (24); die mit der Autorisierungs-Vorrichtung (22) kommunizierend verbindbar ist.

9. Kraftfahrzeug (28) mit einem System (18) nach dem vorstehenden Anspruch.

10. Kraftfahrzeug (28) nach dem vorstehenden Anspruch, wobei die Eingangsschnittstelle (12) einen Anschluss (36) zur Energieeinspeisung aufweist, der an einem Fahrzeugäußeren angeordnet ist; und
die Analyseeinheit (14), die Ausgangsschnittstelle (16) und die Empfangseinheit (24) in einem Fahrzeuginneren angeordnet sind.

11. Verfahren zum Notentriegeln eines Kraftfahrzeugs (28) bei einer Fehlfunktion eines Steuergeräts (32) und/oder einer Stromversorgung der Elektronik des Kraftfahrzeugs (28), das Verfahren aufweisend die folgenden Schritte:
Empfangen (S1) von Autorisierungs-Daten einer Empfangseinheit (24), die mit einer Autorisierungs-Vorrichtung (22) zum Autorisieren eines berechtigten Nutzers kommunizierend verbindbar ist, und Einrichten einer Energieeinspeisung;
Analysieren (S2) der Autorisierungs-Daten und Bestimmen eines Steuerbefehls, basierend auf den Autorisierungs-Daten, und
Übermitteln (S3) des bestimmten Steuerbefehls und zum Einrichten einer Energieeinspeisung zu einem Entriegelungsaktor (26) und der Empfangseinheit (24);
wobei
der Steuerbefehl ein Entriegeln des Kraftfahrzeugs (28) mittels einer über die Energieeinspeisung eingespeisten Energie bewirkt, wenn der Nutzer berechtigt ist,
**gekennzeichnet durch**
Empfangen (S4) von Freigabedaten und Generieren eines Steuerbefehls, der ein Freischalten der Eingangsschnittstelle (12) zum Empfangen von Autorisierungs-Daten und zum Einrichten einer Energieeinspeisung nach Erhalt der Freigabedaten bewirkt.

12. Verfahren nach dem vorstehenden Anspruch, wobei das Verfahren nach Art eines whatchdogs fungiert.

13. Verfahren nach einem der Ansprüche 11 oder 12, wobei der Schritt Einrichten (S1) einer Energieeinspeisung eine Energieeinspeisung mittels eines Smartphones, einer USB-Powerbank und/oder eines Ladegeräts für ein Smartphone umfasst.

14. Verfahren nach einem der Ansprüche 11 bis 13, wobei der Schritt Empfangen (S1) von Autorisierungs-Daten ein Empfangen von Autorisierungs-Daten einer Empfangseinheit (24) in Form eines Kessy-Moduls, mit einer UWB-Kommunikationseinheit (48), einer Bluetooth-Kommunikationseinheit (46) und/oder einer NFC-Kommunikationseinheit (44), umfasst.

15. Computer-Programm mit Programm-Code-Mitteln, um alle Schritte eines Verfahrens nach Anspruch 11 bis 14 durchzuführen, wenn das Computer-Programm auf einem Computer oder einer entsprechenden Recheneinheit ausgeführt wird.

## Claims

1. Device (10) for emergency unlocking of a motor vehicle (28) in the event of a malfunction of a control unit (32) and/or a power supply of the electronics of the motor vehicle (28), the device (10) comprising:
an input interface (12) configured to receive authorization data from a receiving unit (24) which is communicatively connectable to an authorization device (22) for authorizing an authorized user, and to set up an energy supply;
an analysis unit (14) designed to analyze the authorization data and determine a control command based on the authorization data, and
an output interface (16) designed to transmit the determined control command and to set up an energy supply to an unlocking actuator (26) and the receiving unit (24);
the control command causing the motor vehicle (28) to be unlocked by means of energy supplied via the energy supply, if the user is authorized,
**characterized in that**
the input interface (12) is designed to receive release data, and the analysis unit (14) is designed to generate a control command which enables the input interface (12) to receive authorization data and to set up an energy supply after receipt of the release data.

2. Device (10) according to claim 1, wherein the device (10) functions in the manner of a whatchdog.

3. Device (10) according to either of the preceding claims, wherein the input interface (12) is designed to receive authorization data from a receiving unit (24) in the form of a Kessy module, having a UWB communication unit (48), a Bluetooth communication unit (46) and/or an NFC communication unit (44).

4. Device (10) according to any of the preceding claims, wherein the input interface (12) and the output interface (16) are designed to establish an energy supply by means of an energy donor (20) in the form of a smartphone, a USB power bank and/or a charger for a smartphone.

5. Device (10) according to any of the preceding claims, wherein
the input interface (12) has a connection (36) for supplying energy which is accessible from the exterior of the vehicle; and
the analysis unit (14), the output interface (16) and the receiving unit (24) are inaccessible from the exterior of the vehicle.

6. Device (10) according to any of the preceding claims, wherein the analysis unit (14) comprises a microcontroller.

7. Device (10) according to any of the preceding claims, wherein the unlocking actuator (26) comprises a motor of a central locking system of the motor vehicle (28).

8. System (18) for emergency unlocking of a motor vehicle (28) in the event of a malfunction of a control unit (32) and/or a power supply of the electronics of the motor vehicle (28), the system (18) comprising:
a device (10) according to any of the preceding claims;
an energy donor (20) for supplying energy;
an authorization device (22) for authorizing an authorized user; and a receiving unit (24) that is communicatively connectable to the authorization device (22).

9. Motor vehicle (28) comprising a system (18) according to the preceding claim.

10. Motor vehicle (28) according to the preceding claim, wherein the input interface (12) has a connection (36) for supplying energy, which is arranged on the vehicle exterior; and
the analysis unit (14), the output interface (16) and the receiving unit (24) are arranged in the vehicle interior.

11. Method for emergency unlocking of a motor vehicle (28) in the event of a malfunction of a control unit (32) and/or a power supply of the electronics of the motor vehicle (28), the method comprising the following steps:
receiving (S1) authorization data from a receiving unit (24) which is communicatively connectable to an authorization device (22) for authorizing an authorized user, and setting up an energy supply;
analyzing (S2) the authorization data and determining a control command based on the authorization data, and
transmitting (S3) the determined control command and setting up an energy supply to an unlocking actuator (26) and the receiving unit (24);
the control command causing the motor vehicle (28) to be unlocked by means of energy supplied via the energy supply, if the user is authorized,
**characterized by**
receiving (S4) release data and generating a control command which enables the input interface (12) to receive authorization data and to set up an energy supply after receipt of the release data.

12. Method according to the preceding claim, wherein the method functions in the manner of a whatchdog.

13. Method according to one of claims 11 or 12, wherein the step of setting up (S1) an energy supply comprises an energy supply by means of a smartphone, a USB power bank and/or a charger for a smartphone.

14. Method according to any of claims 11 to 13, wherein the step of receiving (S1) authorization data comprises receiving authorization data from a receiving unit (24) in the form of a Kessy module, having a UWB communication unit (48), a Bluetooth communication unit (46) and/or an NFC communication unit (44).

15. Computer program having program code means for carrying out all steps of a method according to claim 11 to 14 when the computer program is executed on a computer or a corresponding computing unit.

## Revendications

1. Dispositif (10) pour le déverrouillage d'urgence d'un véhicule automobile (28) en cas de dysfonctionnement d'un appareil de commande (32) et/ou d'une alimentation en courant de l'équipement électronique du véhicule automobile (28), le dispositif (10) présentant :
une interface d'entrée (12) configurée pour recevoir des données d'autorisation d'une unité de réception (24) qui peut être connectée de manière communicante à un dispositif d'autorisation (22) pour l'autorisation d'un utilisateur qualifié, et pour établir une alimentation en énergie ;
une unité d'analyse (14) configurée pour analyser les données d'autorisation et déterminer une instruction de commande basée sur les données d'autorisation, et
une interface de sortie (16) configurée pour transmettre l'instruction de commande déterminée et pour établir une alimentation en énergie vers un actionneur de déverrouillage (26) et l'unité de réception (24) ; dans lequel
l'instruction de commande provoque un déverrouillage du véhicule automobile (28) au moyen d'une énergie fournie par l'intermédiaire de l'alimentation en énergie, lorsque l'utilisateur est qualifié,
**caractérisé en ce que**
l'interface d'entrée (12) est configurée pour recevoir des données de validation, et l'unité d'analyse (14) est configurée pour générer une instruction de commande qui provoque une activation de l'interface d'entrée (12) pour la réception des données d'autorisation et pour l'établissement d'une alimentation en énergie après obtention des données de validation.

2. Dispositif (10) selon la revendication 1, dans lequel le dispositif (10) agit à la manière d'un élément de surveillance.

3. Dispositif (10) selon l'une des revendications précédentes, dans lequel l'interface d'entrée (12) est configurée pour recevoir des données d'autorisation d'une unité de réception (24) sous forme de module Kessy, comportant une unité de communication ULB (48), une unité de communication Bluetooth (46) et/ou une unité de communication CCP (44).

4. Dispositif (10) selon l'une des revendications précédentes, dans lequel l'interface d'entrée (12) et l'interface de sortie (16) sont configurées pour établir une alimentation en énergie au moyen d'un donneur d'énergie (20) sous forme de mobile multifonction, de batterie externe USB et/ou de chargeur pour un mobile multifonction.

5. Dispositif (10) selon l'une des revendications précédentes, dans lequel
l'interface d'entrée (12) présente un connecteur (36) pour l'alimentation en énergie, lequel est accessible depuis l'extérieur du véhicule ; et
l'unité d'analyse (14), l'interface de sortie (16) et l'unité de réception (24) sont inaccessibles depuis l'extérieur du véhicule.

6. Dispositif (10) selon l'une des revendications précédentes, dans lequel l'unité d'analyse (14) comprend un microdispositif de commande.

7. Dispositif (10) selon l'une des revendications précédentes, dans lequel l'actionneur de déverrouillage (26) comprend un moteur d'un verrouillage central du véhicule automobile (28).

8. Système (18) pour le déverrouillage d'urgence d'un véhicule automobile (28) en cas de dysfonctionnement d'un appareil de commande (32) et/ou d'une alimentation en courant de l'équipement électronique du véhicule automobile (28), le système (18) présentant :
un dispositif (10) selon l'une des revendications précédentes ;
un donneur d'énergie (20) pour l'alimentation en énergie ;
un dispositif d'autorisation (22) pour l'autorisation d'un utilisateur qualifié ; et une unité de réception (24) ; laquelle peut être connectée de manière communicante au dispositif d'autorisation (22).

9. Véhicule automobile (28) comportant un système (18) selon la revendication précédente.

10. Véhicule automobile (28) selon la revendication précédente, dans lequel l'interface d'entrée (12) présente un connecteur (36) pour l'alimentation en énergie, lequel est disposé à l'extérieur du véhicule ; et
l'unité d'analyse (14), l'interface de sortie (16) et l'unité de réception (24) sont disposées dans l'habitacle du véhicule.

11. Procédé pour le déverrouillage d'urgence d'un véhicule automobile (28) en cas de dysfonctionnement d'un appareil de commande (32) et/ou d'une alimentation en courant de l'équipement électronique du véhicule automobile (28), le procédé présentant les étapes suivantes :
réception (S1) de données d'autorisation d'une unité de réception (24) qui peut être connectée de manière communicante à un dispositif d'autorisation (22) pour l'autorisation d'un utilisateur qualifié, et établissement d'une alimentation en énergie ;
analyse (S2) des données d'autorisation et détermination d'une instruction de commande basée sur les données d'autorisation, et
transmission (S3) de l'instruction de commande déterminée et établissement d'une alimentation en énergie vers un actionneur de déverrouillage (26) et l'unité de réception (24) ; dans lequel
l'instruction de commande provoque un déverrouillage du véhicule automobile (28) au moyen d'une énergie fournie par l'intermédiaire de l'alimentation en énergie, lorsque l'utilisateur est qualifié,
**caractérisé par**
la réception (S4) de données de validation et la génération d'une instruction de commande qui provoque une activation de l'interface d'entrée (12) pour la réception des données d'autorisation et pour l'établissement d'une alimentation en énergie après obtention des données de validation.

12. Procédé selon la revendication précédente, dans lequel le procédé agit à la manière d'un élément de surveillance.

13. Procédé selon l'une des revendications 11 ou 12, dans lequel l'étape d'établissement (S1) d'une alimentation en énergie comprend une alimentation en énergie au moyen d'un mobile multifonction, d'une batterie externe USB et/ou d'un chargeur pour un mobile multifonction.

14. Procédé selon l'une des revendications 11 à 13, dans lequel l'étape de réception (S1) de données d'autorisation comprend une réception de données d'autorisation d'une unité de réception (24) sous forme de module Kessy, comportant une unité de communication ULB (48), une unité de communication Bluetooth (46) et/ou une unité de communication CCP (44).

15. Programme informatique comportant des moyens de code de programme afin de mettre en œuvre toutes les étapes d'un procédé selon les revendications 11 à 14 lorsque le programme informatique est exécuté sur un ordinateur ou sur une unité de calcul correspondante.
